# EUROPEAN PATENT APPLICATION

(11) **EP 1 151 893 A2**
(43) Date of publication of application: **07.11.2001**
(21) Application number: 01201504.6
(22) Date of filing: 25.04.2001
(51) Int. Cl.: B60N 2/28

(54) **Connecting element for detachably connecting a child seat support to a vehicle seat**

(30) Priority: 26.04.2000 NL 1015020
(71) Applicant: Maxi Miliaan B.V., NL-5705 DG Helmond (NL)
(72) Inventor: Siewertsen, Adriaan, 5691 MD Son (NL)
(74) Representative: Dohmen, Johannes Maria Gerardus

(57) **Abstract**

A connecting element for detachably connecting a seat support to a vehicle seat which comprises a seat portion, a backrest and connecting brackets disposed between said backrest and said seat portion. The connecting element comprises a frame which can be detachably connected to the seat support, and at least two hook-shaped elements, which can be adjusted in at least three positions with respect to the frame and which can be detachably connected to the connecting brackets.

## Description

The invention relates to a connecting element for detachably connecting a seat support to a vehicle seat which comprises a seat portion, a backrest and connecting brackets disposed between said backrest and said seat portion.

The invention furthermore relates to seat supports which are suitable for being connected to a vehicle seat by means of such a connecting element.

To an increasing extent, children's vehicle seats are mounted in a vehicle by means of connecting brackets that are present in the vehicle, which connecting brackets extend between the backrest and the seat portion of a vehicle seat. With the children's vehicle seats that are known so far, each children's vehicle seat comprises a connecting element connected thereto, by means of said children's vehicle seat can be connected to said connecting brackets.

With so-called baby seats, which are suitable for babies until the age of about nine months weighing up to about 13 kg, it is desirable that the baby seat can be placed into the vehicle or be removed therefrom without any difficulty, so that the baby seat can be used for conveying the baby outside the vehicle as well, either as a separate seat or mounted on a mobile chassis, such as a stroller.

With children's vehicle seats for slightly older children, for example children until the age of 4 years weighing not more than 18 kg, for example, hereinafter called toddler's seats, the seat generally remains behind in the vehicle, only when the toddler is to be conveyed in another vehicle is the seat transferred to that vehicle.

With the baby seats and the toddler's seats that are currently commercially available, each seat is individually fitted with a connecting element.

The object of the invention is to provide a connecting element which can readily be transferred from one seat support to another seat support.

This objective is accomplished with the connecting element according to the invention in that said connecting element comprises a frame which can be detachably connected to the seat support, and at least two hook-shaped elements, which can be adjusted in at least three positions with respect to the frame and which can be detachably connected to the connecting brackets.

Since the frame can be detachably connected to the seat support, it can readily be transferred from one seat support, which can be detachably connected to a baby seat, for example, to another seat support, which is connected to a toddler's seat, for example.

In this way it is possible to transfer the connecting element from one seat support to another seat support when changing from a baby seat to a toddler's seat. Since the hook-shaped elements are furthermore adjustable, preferably continuously variably, with respect to the frame, it is possible to realise an adaptation of the position of the hook-shaped elements both to the position of the connecting brackets of various types of vehicles and to the dimensions of a specific seat support.

Adaptation of the position of the hook-shaped elements with respect to the seat support furthermore makes it possible to fix the seat support to the vehicle seat with a bias to be adjusted by the user. A bias is obtained when the backrest of the vehicle seat is depressed a few centimetres, for example. The extent to which the backrest is depressed will vary with each type of vehicle, depending on the hardness of the backrest. In principle, this adjustment is an operation which needs to be carried out only once for each type of vehicle.

It is noted that EP-A2-0 703 113 discloses a connecting element for detachably connecting a seat to a vehicle seat, wherein the hook-shaped elements are movable between an operative position and a storage position. It is not known from said publication to adjust the hook-shaped elements in dependence on the type of vehicle.

One embodiment of the connecting element according to the invention is characterized in that each hook-shaped element is connected to a screwed spindle.

Said screwed spindle makes it possible to realise a continuously variable adjustment of the hook-shaped element in a simple manner.

Another embodiment of the connecting element according to the invention is characterized in that the frame can be detachably connected to at least two pins disposed in the seat support, which pins extend parallel to the backrest and to the seat portion.

By connecting the frame to two spaced-apart pins, a firm connection between the frame and the seat support can be obtained in a simple manner.

Another embodiment of the connecting element according to the invention is characterized in that one pin is disposed near the seat portion, some distance apart from the backrest, whilst the other pin is disposed near the backrest, some distance apart from the seat portion.

The forces and moments that are exerted on the seat support in case of a collision of the vehicle are distributed relatively adequately over the seat support in this manner.

The invention will now be explained in more detail with reference to the drawings, wherein:
Figure 1 is a perspective bottom plan view of a first embodiment of a connecting element which is connected to a seat support;
Figure 2 is a side elevation of a toddler's seat which is connected to a vehicle seat by means of the connecting element of Figure 1;
Figure 3 is a perspective view of a second embodiment of a connecting element according to the invention, in combination with a seat support for a baby seat;
Figure 4 is a perspective view of the seat support which is connected to a vehicle seat by means of the connecting element that is shown in Figure 3;
Figure 5 is a perspective bottom plan view of a baby seat;
Figure 6 is a cross-sectional view of a part of the baby seat that is shown in Figure 5;
Figures 7 and 8 show the manner in which the baby seat of Figure 5 is connected to the seat support of Figure 4;
Figure 9 is a perspective bottom plan view of a third embodiment of connecting elements according to the invention, which are coupled to a seat support of a toddler's seat and to a seat support for a baby seat, respectively; and
Figures 10 - 14 show a second embodiment of an element to be connected to a seat support in various operative positions thereof.

Parts corresponding to each other are indicated by the same numerals in the figures.

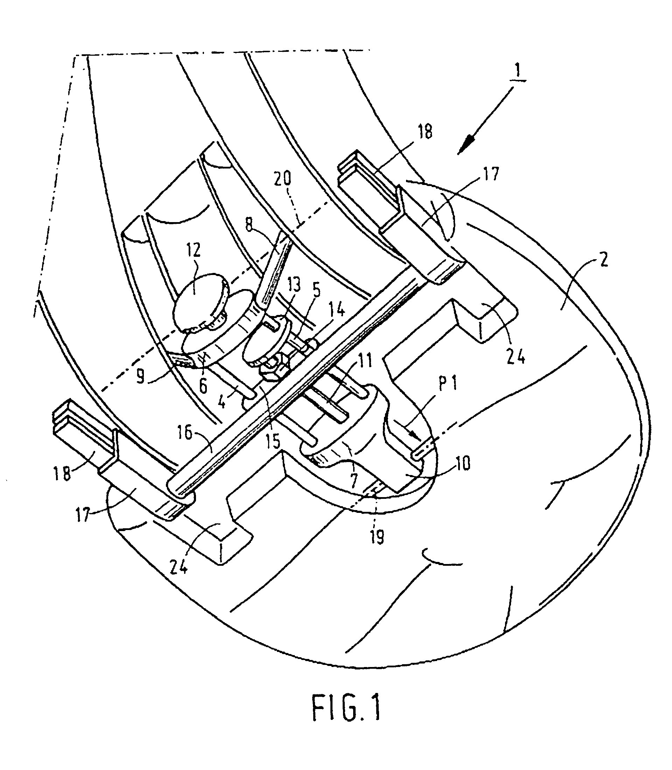

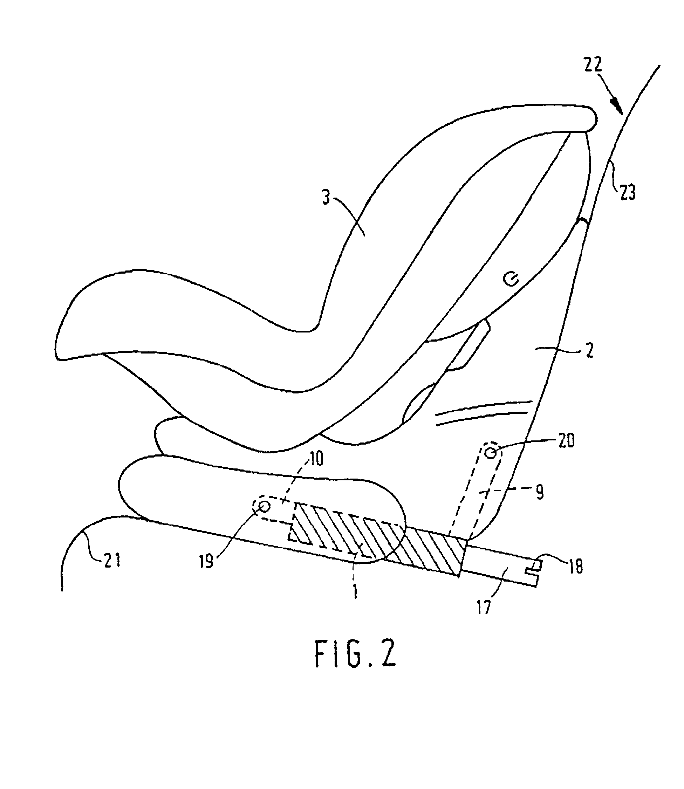

Figure 1 is a perspective bottom plan view of a connecting element 1 according to the invention, which is connected to a seat support 2 of a toddler's seat 3 that is shown in Figure 2. Connecting element 1 comprises two parallel bars 4, which are interconnected at both ends by means of blocks 6, 7. Block 6 has two arms 8, 9, which are provided with coupling elements on sides remote from block 6. Block 7 includes a coupling element 10 on a side remote from bar 4, 5. Disposed between bars 4, 5 is a stud 11, which is rotatably disposed in block 7 with one end and which is connected to an operating knob 12 on a side of block 6 remote from block 7. An adjusting plate 13 is furthermore fixed to stud 11. Stud 11 extends through a nut 14, which is fixed to a plate 15 that extends transversely to bars 4, 5. Plate 15 is provided with recesses, through which bars 4, 5 extend. Plate 15 is connected to a rod 16 extending transversely to bars 4, 5, which rod is provided with arms 17 at bot ends. Arms 17 are provided with hook-shaped elements 18 at their ends remote from rod 16. Said hook-shaped elements 18 are intended for being connected to connecting brackets that are present in a vehicle. Said hook-shaped elements are known, for example from the applicant's Dutch patent no. 1009912, and consequently they will not be explained in more detail herein.

Seat support 2 comprises two pins 19, 20 extending parallel to rod 16, which pins are rigidly connected to seat support 2. As is clearly shown in Figure 2, pin 19 is disposed near a seat portion 21 of a vehicle seat 22, whilst pin 20 is disposed near the backrest 23 of vehicle seat 22.

Seat support 2 furthermore comprises recesses 24 arranged in line with arms 17.

The seat support 2 of toddler's seat 3 is connected to the vehicle seat 22 in the following manner.

The hook-shaped elements that are connected to arms 8, 9 are coupled to pin 20, after which the hook-shaped element 10 is connected to pin 19. Then rod 16 is moved in the direction indicated by arrow P1, or in the opposite direction, by means of operating knob 12. If it is desired to connect the toddler's seat 3 to the vehicle seat 22 in a traditional manner, by means of a safety belt, rod 16 is moved in the direction indicated by arrow P1 until arms 17 are partially positioned in recesses 24, and the entire connecting element 1 is positioned in the bottom side of seat support 2.

As a rule, however, rod 16 will be moved in a direction opposed to the direction indicated by arrow P1 until the hook-shaped elements 18 extend a desired distance away from seat support 2.

It is possible to indicate a desired depth adjustment for each type of car by means of adjusting mechanism 13.

After rod 16 has been moved the desired distance by means of operating knob 12, the hook-shaped elements 18 are connected to the connecting brackets (not shown) that are present between backrest 23 and seat 21.

When toddler's seat 3 is to be transferred to another vehicle, the hook-shaped elements 18 are unlocked, after which the toddler's seat 3 with the seat support 2 connected thereto and the connecting element 1 connected to said seat support are simply transferred to the other vehicle. If necessary, rod 16 is moved to the desired position for the vehicle in question by means of operating knob 12.

As is clearly shown in Figure 2, pins 19 and 20 are spaced relatively far apart, whilst they are also spaced from hook-shaped elements 18 by a relatively large distance, as a result of which an adequate distribution of forces over seat support 2 is ensured.

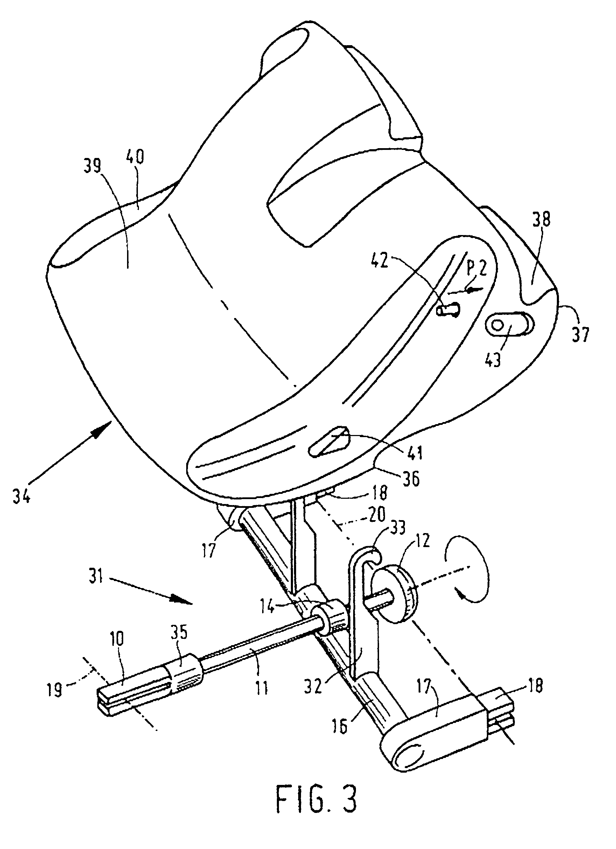

Figure 3 shows a second embodiment of a connecting element 31 according to the invention, which comprises rod 16 as well as arms 17 and hook-shaped elements 18, which are connected thereto with their ends. Furthermore connected to rod 16 are two hook-shaped arms 32, which can be moved into engagement, with their ends 33 remote from rod 16, with a pin 20 which is disposed in seat support 34. Rod 16 is fitted with a nut 14 between hook-shaped arms 32, through which stud 11 extends. Stud 11 is provided with operating knob 12 on one side of the nut, and on a side remote from operating knob 12 it is provided with a block 35 that is pivotally connected thereto. Present on block 35, on a side remote from stud 11, is the coupling element 10, which can be moved into engagement with the pin 19 of seat support 34. Seat support 34 forms the subject matter of a separate patent application of the present applicant, and consequently it will be explained only briefly herein. Seat support 34 comprises a substantially horizontal portion 36 and a vertical portion 37 which extends substantially transversely thereto. Vertical portion 37 is provided with an elongated groove 38 on a side remote from horizontal portion 36. Groove 38 is open on a side remote from horizontal portion 36. Seat support 34 furthermore comprises a bridge portion 39, which extends between ends of the horizontal portion 36 and vertical portion 38 facing away from each other. Bridge portion 39 is bounded by recessed portions 40 on both longitudinal sides. Disposed in said recessed portions 40 are cam-shaped connecting members 41, which extend upwards from horizontal portion 36. Seat support 34 furthermore comprises lips 42 disposed in said recessed portions 40, which lips can be moved against spring force in the direction indicated by arrow P2, towards the vertical portion 37. The lips 42 can be jointly moved in the direction indicated by arrow P2 by means of a operating knob 9.

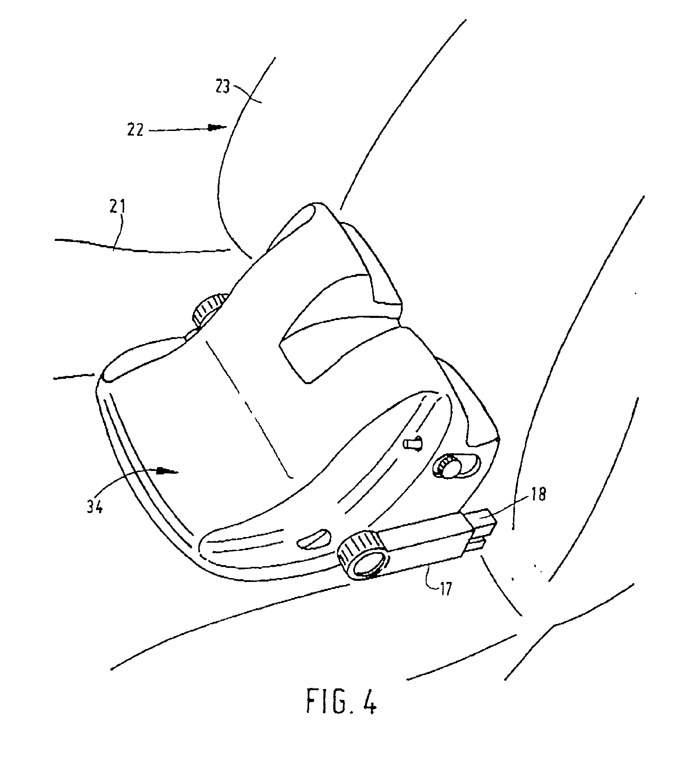

Figure 4 shows the seat support 34 that is connected to vehicle seat 22 by means of connecting element 31.

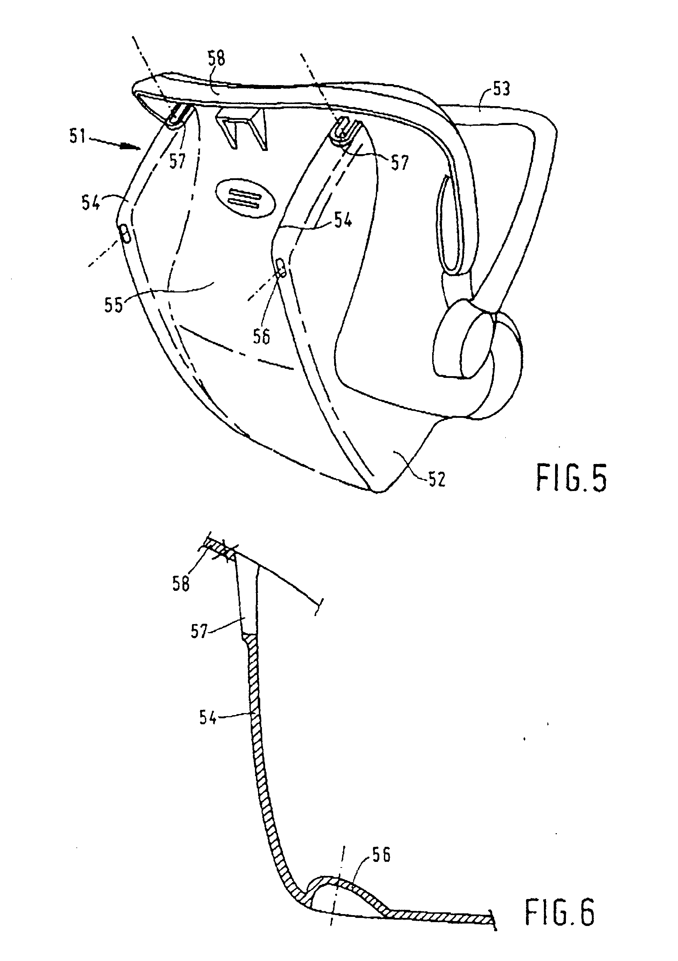

Figures 5 and 6 are a perspective view and a cross-sectional view, respectively, of a part of a baby seat 51 according to the invention. Baby seat 51 comprises a bucket 52 and a carrying handle 53, which is pivotally connected thereto. Bucket 52 comprises two flange-like side walls 54 on a front side and a bottom side, between which a wall portion 55 extends. In use, the legs of the baby that is present in baby seat 51 are supported on said wall portion 55. The flange-like side walls 54 each include a recess 56 at their bottom sides, and a U-shaped slot 57 located near the front side of the baby seat 51 at their upper sides. Near its front side, bucket 52 is furthermore provided with an edge 58 extending beyond slots 57, which edge extends at least between the walls 54 in the direction of the bottom side of bucket 52.

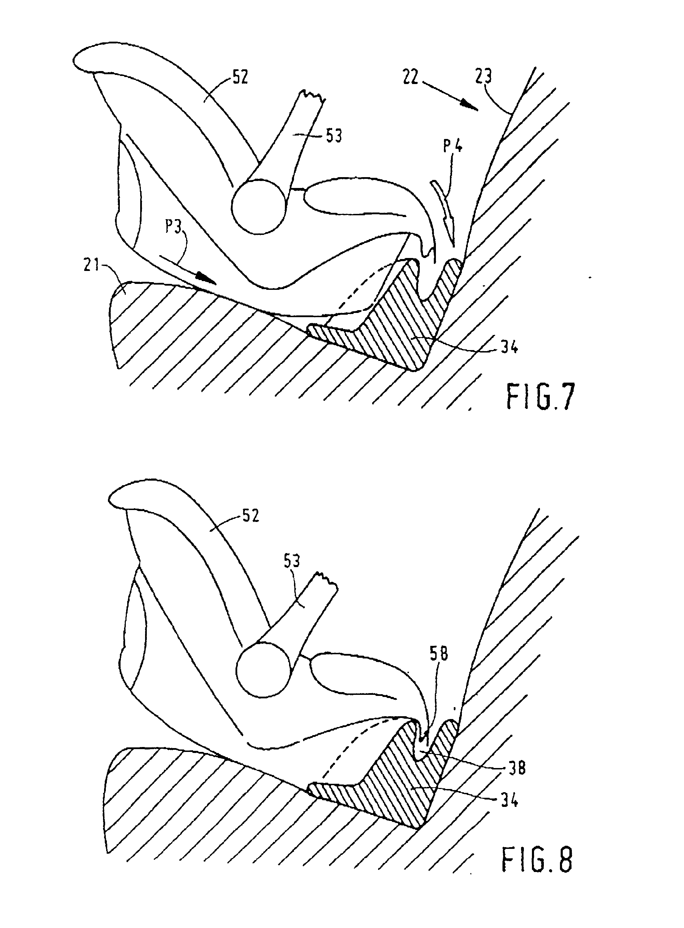

Baby seat 51 is coupled to the seat support 34 connected to the vehicle seat 22 in the following manner. Baby seat 51 is positioned with its underside on seat portion 21, opposite the seat support 1. Then the baby seat 51 is moved across seat portion 21, in the direction indicated by arrow P3, towards seat support 1, whereby the side walls 54 are positioned in the recessed portions 40 on either side of bridge portion 39. Baby seat 51 is thereby held in such a position with respect to seat support 1 that the edge 58 can readily be moved over bridge portion 39. After the baby seat 51 has been moved to the position that is shown in Figure 7, baby seat 51 is tilted in the direction indicated by arrow P4 about an axis extending parallel to the backrest and the seat portion, whereby the recesses 56 present at the bottom side of the side walls 54 are positioned over the cam-shaped connecting members 41. At the same time, walls 54 push the lips 42 in the direction indicated by arrow P2 against spring force. As soon as slots 57 are positioned opposite lips 42, however, lips 42 will be moved into slots 57 in the direction opposed to the direction indicated by arrow P2 under the influence of the spring force. Baby seat 51 is now firmly connected to seat support 1. In addition, after bucket 52 has tilted in the direction indicated by arrow P4, the edge 58 will be positioned in groove 38 (see Figure 8). If a relatively large force is exerted on baby seat 51 in a direction away from backrest 43 in case of a collision of the vehicle, the presence of edge 58 in groove 38 will effectively help to prevent the baby seat 51 from moving undesirably with respect to seat support 1.

It is also possible to connect the connecting element that is shown in Figure 1 to seat support 34.

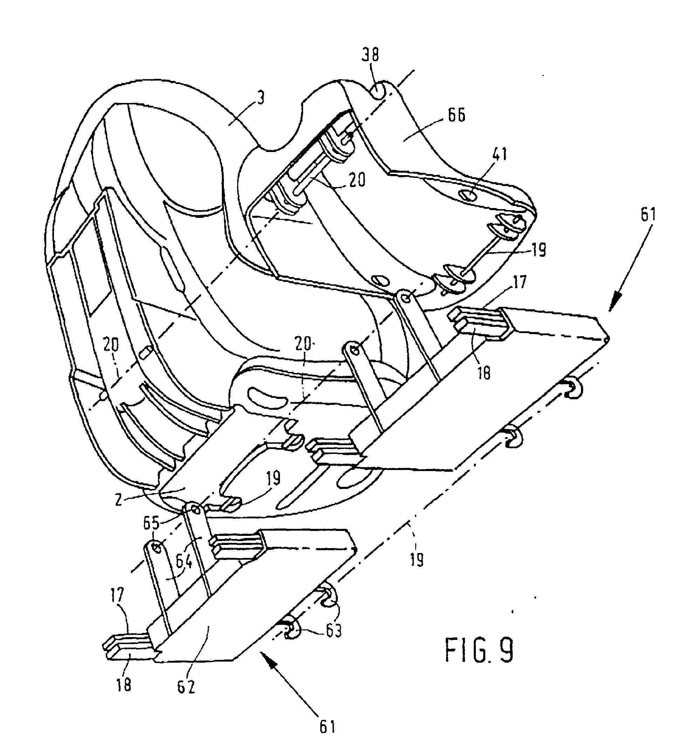

Figure 9 shows perspective views of connecting elements 61 according to the invention, which comprise a baseplate 62, hooks 63 connected to the baseplate 62, which are to be coupled to pin 19, arms 64 extending transversely to the baseplate 62, which arms have eyes 65 at their ends remote from baseplate 62, through which pin 20 is passed. Baseplate 62 furthermore comprises arms 17 movably disposed therein, whose ends remote from baseplate 62 are fitted with hook-shaped elements 18 that can be coupled to the connecting brackets.

As is clearly shown in Figure 9, connecting element 61 can be coupled to the seat support 2 of a toddler's seat 3 as well as to a seat support 66 for a baby seat 51.

It is also possible to connect the nut to the frame and to connect the stud to the hook-shaped elements 18.

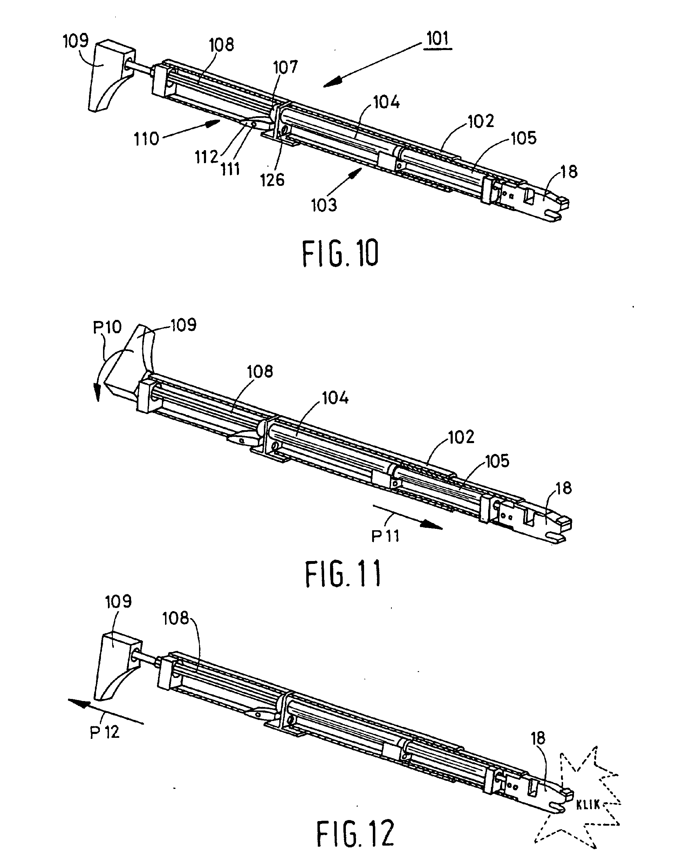

Figures 10 - 14 are perspective views of a second embodiment of an element 101 according to the invention. Preferably, two elements 101 are connected to a seat support in parallel relationship. Each connecting element 101 includes a rectangular sleeve 101, in which a screwed spindle 103 is accommodated. Screwed spindle 103 comprises an internally threaded tube 104, which is rotatable about an externally threaded tube 105. Tube 105 is connected to hook-shaped element 18. Tube 105 is locked against rotation. Element 101 furthermore comprises a stop plate 105. Tube 104 is fitted with a stop ring 107 on a side remote from hook-shaped element 17. Element 101 furthermore comprises a hexagonal set pin 108, which is connected to an operating knob 109 with a first end and which is connected, via an intermediate element, to a releasing mechanism of the hook-shaped element 18 at an end remote from said first end. Said intermediate element and said disconnecting mechanism are not shown in the figures, but they may be mechanisms of an isofix connector, which are known per se, or mechanism as disclosed in EP-A-0 703 113.

Element 101 furthermore comprises an unlocking mechanism 110, which comprises a cam 112 which can be tilted about a pin 111.

The operation of element 101 is as follows. Two elements 101 are fixed to a frame at the works. The frame may be an element which can be detachably coupled to a seat support, whereby a baby chair is detachably connected to said seat support. It is more practical, however, to consider the seat support 34 that is shown in Figure 4 as the frame, whereby elements 101 are connected to either side or to the bottom side of seat support 34, rather than the arms 17 and the hook-shaped elements 18 that are shown in Figure 4. The spacing between hook-shaped elements 18 must thereby be selected to correspond to the spacing between the connecting brackets that are present in the vehicle. The spacing between the connecting brackets is described in international standards.

Before seat support 34 can be connected to the connecting brackets of vehicle by means of elements 101, the hook-shaped elements 18 must be disposed a desired distance apart from seat support 34. To this end knob 109 is rotated in the direction indicated by arrow P10, as a result of which the hexagonal bar 108 that is connected to operating knob 109 is likewise rotated. Hexagonal bar 108 is accommodated in a hexagonal opening in tube 104, as a result of which tube 104 will likewise rotate in the direction indicated by arrow P10. Since tubes 104, 105 are interconnected by means of screw thread, rotation of tube 104 will cause tube 105 to be moved in the direction indicated by arrow P11. In this way the hook-shaped element 18 is moved further away from seat support 34. If the hook-shaped element 18 has been moved too far away from seat support 34, the operating knob 109 must be rotated in the direction opposed to the direction indicated by arrow P10, as a result of which tube 105 is translated in the direction opposed to the direction indicated by arrow P11. It is possible to provide a graduation so as to facilitate the adjustment of hook-shaped element 18 with respect to seat support 34. The desired setting for each type of car can be indicated in a table that is separately supplied. It is also possible to indicate specific types of cars directly on the graduation.

After the elements 101 have been moved to the desired position, the seat support 34 can be interlocked with the vehicle by simply causing the hook-shaped elements 18 to engage the brackets that are present in the vehicle. If desired, the force with which the seat support 34 is pressed against the vehicle seat can be increased or decreased by turning the operating knob 109.

When the seat support 34 is to be removed from the vehicle, for example because the vehicle seat is temporarily needed for a grown-up, the operating knob moved in the direction indicated by arrow P12, as is shown in Figure 12, whereby hexagonal pin 108 is likewise moved in the direction indicated by arrow P12. Hexagonal pin 108 is connected to the unlocking mechanism for the hook-shaped element 18 on a side remote from operating knob 109. Rotation of operating knob 109 will thus result in the hook-shaped element 18 being unlocked, after which the seat support 34 can be removed from the vehicle.

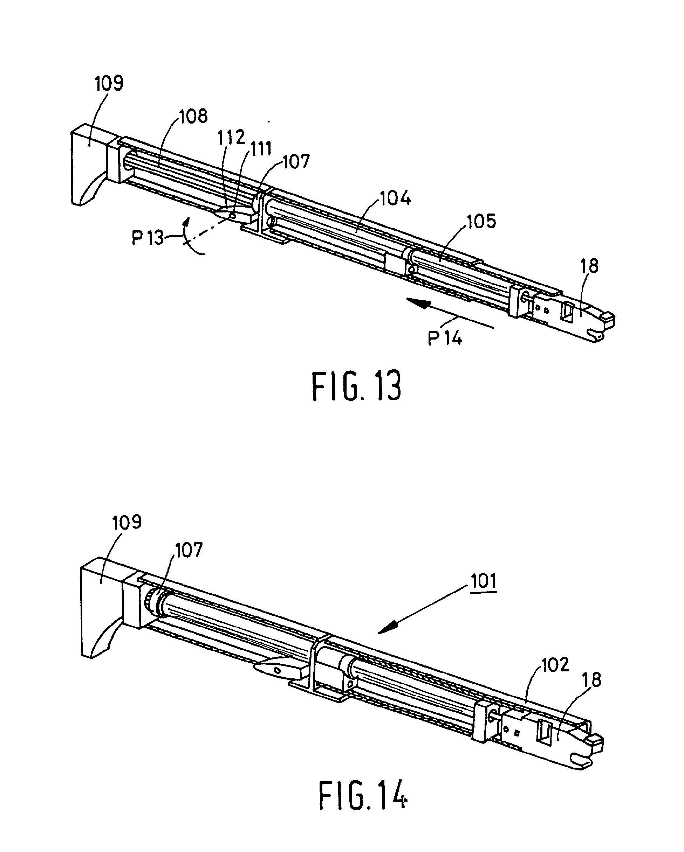

In order to prevent persons hurting themselves on the projecting hook-shaped elements or prevent the hook-shaped elements 18 being damaged in case the seat support is dropped, said hook-shaped elements 18 can be stored in rectangular housing 102. To this end cam 112 is tilted about pin 111 in the direction indicated by arrow P13, thus creating a space such that the stop ring 107, together with the tube 104, the tube 105 and the hook-shaped element 18 connected thereto can be moved in the direction indicated by arrow P14 to the storage position that is shown in Figure 14. The hook-shaped element 18 is now accommodated practically entirely in rectangular housing 102, whilst the stop ring 107 is positioned relatively close to operating knob 109.

As soon as the seat support is to be mounted in the same vehicle again, the hook-shaped element 18 is manually pulled out of tubes 102, until the stop ring 107 abuts against stop plate 106. Once cam 112 has been tilted in the direction indicated by arrow P13, the position of the hook-shaped element 18 with respect to the seat support is fixed. In addition, the hook-shaped element 18 takes up the desired position with respect to seat support 34 again.

As is apparent from the above, the operating knob 109 has two functions, viz. adjusting the hook-shaped element 18 with respect to rectangular housing 102 as well as unlocking the hook-shaped element 18.

It is possible to provide operating knob 109 with indication means, which show whether or not the hook-shaped element 18 is locked. This makes it possible to verify in a simple manner whether a desired interlocking between the hook-shaped element and the brackets has been obtained.

Preferably, element 110 is fitted with a springing element, which ensures that the operating knob 109 will always return to the position in which it abuts against housing 102.

It is possible to connect the hexagonal pin 108 to the unlocking mechanism of the hook-shaped element 18 by means of a cable.

## Claims

1. A connecting element for detachably connecting a seat support to a vehicle seat which comprises a seat portion, a backrest and connecting brackets disposed between said backrest and said seat portion, **characterized in that** said connecting element comprises a frame which can be detachably connected to the seat support, and at least two hook-shaped elements, which can be adjusted in at least three positions with respect to the frame and which can be detachably connected to the connecting brackets.

2. A connecting element according to claim 1, **characterized in that** each hook-shaped element is connected to a screwed spindle.

3. A connecting element according to claim 2, **characterized in that** said screwed spindle is provided with an operating knob on a side remote from said hook-shaped element.

4. A connecting element according to claim 3, **characterized in that** said operating knob is movable in axial direction with respect to said screwed spindle for unlocking said hook-shaped element.

5. A connecting element according to any one of the preceding claims 2 - 4, **characterized in that** said screwed spindle is slidably accommodated in a housing, wherein the screwed spindle can be moved from a storage position, in which it is positioned practically entirely within the housing, to an operative position, in which it is positioned outside the housing, and vice versa, after an unlocking mechanism has been released.

6. A connecting element according to claim 5, **characterized in that** said frame can be detachably connected to at least two pins disposed in the seat support, which pins extend parallel to said backrest and said seat portion.

7. A connecting element according to claim 6, **characterized in that** one pin is disposed near the seat portion, some distance apart from the backrest, whilst the other pin is disposed near the backrest, some distance apart from the seat portion.

8. A connecting element according to any one of the preceding claims, **characterized in that** said hook-shaped elements are adjustable with respect to said frame by means of a stud which is connected to the frame, which stud is rotatably disposed in a nut which is connected to said hook-shaped elements.

9. A seat support suitable for being connected to a vehicle seat by means of a connecting element according to any one of the preceding claims, which seat support can be detachably connected to a baby seat.

10. A seat support suitable for being connected to a vehicle seat by means of a connecting element according to any one of the preceding claims 5 - 9, which seat support can be detachably connected to a toddler's seat.
